# EUROPÄISCHE PATENTSCHRIFT

(11) **EP 1 331 303 B1**
(45) Veröffentlichungstag und Bekanntmachung des Hinweises auf die Patenterteilung: **08.11.2006**
(21) Anmeldenummer: 02026623.5
(22) Anmeldetag: 29.11.2002
(51) Int. Cl.: D21B 1/32

(54) **Verfahren zum Auflösen von verunreinigtem Altpapier**
Method for pulping waste paper containing impurities
Procédé pour la réduction en pâte de vieux papiers contenant des impuretés

(30) Priorität: 24.01.2002 DE 10202629
(43) Veröffentlichungstag der Anmeldung: 30.07.2003
(73) Patentinhaber: Voith Patent GmbH, 89522 Heidenheim (DE)
(72) Erfinder: Pfalzer, Lothar, Dr., 88214 Ravensburg (DE)

(56) Entgegenhaltungen:
- EP-A- 0 898 012
- DE-A- 19 810 649
- US-A- 4 974 781

## Beschreibung

Die Erfindung bezieht sich auf ein Verfahren gemäß dem Oberbegriff des Anspruchs 1.

Ein solches Verfahren ist z.B. aus der EP 898 012 A1 bekannt. Damit soll verschmutztes Altpapier mit Wasser vermischt und zerkleinert werden, was durch den dort beschriebenen Bearbeitungskanal sehr gut möglich ist. Dabei wird eine Auflösetrommel beschrieben, deren Stirnflächen durch nicht mitrotierende, gegen die Trommel abgedichtete Scheiben im Wesentlichen verschlossen ist. Die Zu- und Abfuhr der Stoffe erfolgt dann durch in diese Scheiben eingebrachte Öffnungen.

Auch wenn das bekannte Auflöseverfahren bereits sehr gute Ergebnisse bringt, können jedoch bei besonders ungünstigen Bedingungen Probleme beim Austrag des Stoffes aus dieser Auflösetrommel auftreten. Das gilt insbesondere dann, wenn das aufzulösende Altpapier sehr stark mit größeren Störstoffteilen verschmutzt ist. Problematisch können z.B. die in großen Mengen vorkommenden Plastikfolien, Ballendrähte und sonstige längliche, flexible Bänder sein.

Der Erfindung liegt daher die Aufgabe zu Grunde, das bekannte Verfahren so weiter zu entwickeln, dass der Austrag des Stoffes aus der Auflösetrommel noch besser und betriebssicher möglich ist.

Diese Aufgabe wird durch die im Kennzeichen des Anspruchs 1 genannten Merkmale bereits vollständig gelöst.

Die im Austragsbereich der Trommel angebrachte Wendel hat zunächst die Wirkung, dass der Stoff entsprechend der an sich bekannten Förderwirkung solcher Wendel definiert aus der Trommel ausgetragen werden kann. Es bildet sich nämlich im unteren Bereich ein Bodensumpf, der dort maximal bis zur Oberkante der Wendel aufgestaut wird. In Folge der Trommeldrehung wird der zwischen den Wendeln gesammelte Stoff axial nach außen gefördert. Die Transportmenge ist dann von der Trommeldrehzahl abhängig. Wenn das ein Nachteil ist, könnte die Wendel auch einen getrennten Abrieb haben und z.B. langsamer als die Trommel rotieren.

Ein wichtiger Effekt der erfindungsgemäßen Maßnahmen liegt darin, dass die Innenkante der Wendelfläche in dem Bereich, in dem sich die Trommelwand nach oben bewegt eine nach oben gerichtete Förderwirkung hat. Es ist nun beabsichtigt, diese Förderwirkung in erster Linie für die Bewegung der großen und groben Störstoffe zu nutzen. Mit Vorteil kann diese Förderbewegung durch vorstehende Zähne, Kanten oder Haken noch verstärkt werden. Dadurch können Ansammlungen von Störstoffen oder entsprechend große Störstoffe nicht mehr im Bodenbereich der Trommel verbleiben und dort durch Anhängen immer weiterer nachfolgender Störstoffe verspinnen. Vielmehr werden sie rechtzeitig nach oben transportiert, z.B. über den Verdrängungskörper hinweg und auf der Gegenseite wieder herab fallen gelassen. Das kann zunächst zu einem Aufreissen von Ansammlungen solcher Stoffe führen, was bereits als günstig anzusehen ist. Als zusätzliche Maßnahme können für die herabfallenden Störstoffe im Fallbereich spezielle Austragsvorrichtungen vorhanden sein. Es ist aber auch möglich, dass diese Vorrichtungen nicht erforderlich sind, wenn auf Grund der allgemeinen Bewegung in der Trommel ein ausreichender Axialtransport erfolgt. Es ist nämlich damit zu rechnen, dass der herabfallende Unrat durch die in Axialrichtung transportierte Faserstoffmasse ebenfalls ein Stück mitgenommen wird. Durch wiederholtes Auf- und Abwärtsbewegen dieser Störstoffe gelangen diese dann sicher aus der Trommel heraus. Selbstverständlich kann auch eine Schrägstellung der Trommel dazu führen, dass allein schon beim Herabfallen der Störstoffe ein - wenn auch nur geringer - Axialtransport erfolgt.

Die Erfindung und ihre Vorteile werden erläutert an Hand von Zeichnungen. Dabei zeigen:
- Fig. 1: eine für das Verfahren geeignete Trommel in geschnittener Seitenansicht;
- Fig. 2: eine ähnliche Trommel, wie in Fig. 1, mit Blick auf eine Stirnseite;
- Fig. 3: schematisch: Eine genau waagerecht liegende Trommel;
- Fig. 4: schematisch: Eine geneigte Trommel.

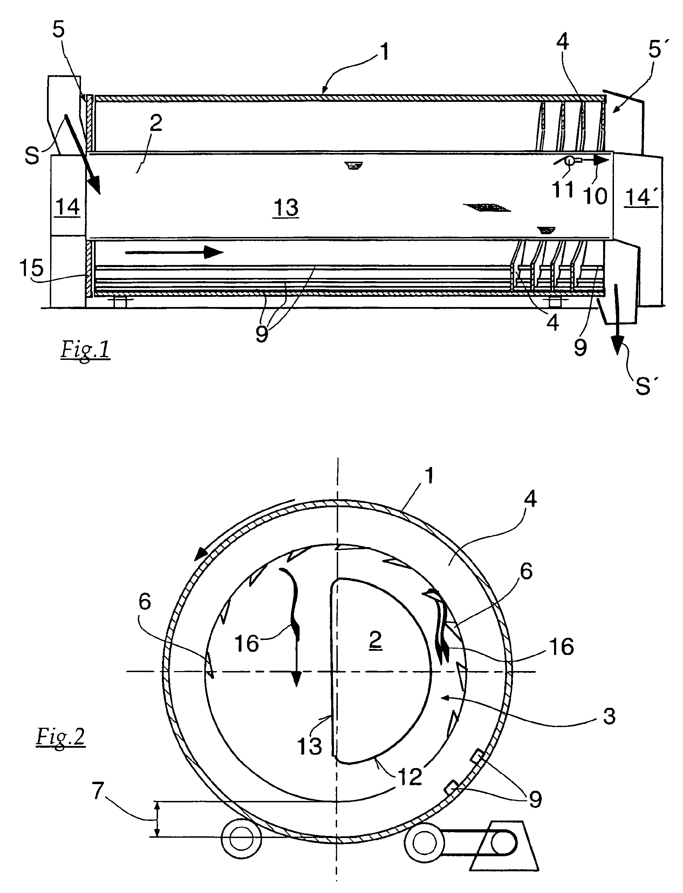

Eine mögliche Ausführungsform einer Trommel zur Durchführung des erfindungsgemäßen Verfahrens zeigt die Fig. 1, bei der die Trommel 1 geschnitten in Seitenansicht dargestellt ist. Sie wird von links mit dem verunreinigten Altpapier S beschickt, das an der ersten Stirnseite 5 eingefüllt wird, wozu sich dort eine Einfüllöffnung in der still stehenden, gegen die Trommel abgedichteten Stirnwand 15 befindet. Das Altpapier wird dann innerhalb der Trommel von der ersten zur zweiten Stirnseite 5' bewegt. Für die Hebebewegung am aufwärts laufenden Teil der Trommel sorgen an der Trommelinnenwand festgemachte Förderleisten 9, von denen hier nur einige gezeichnet sind. Innerhalb der Trommel und durch ihre ganze Länge hindurch ist ein Verdrängungskörper 2 angeordnet, der auf beiden Seiten von außen durch die Stützen 14 und 14' gehalten wird. Der Verdrängungskörper 2 hat auf einem Teil seines Umfanges eine gewölbte Außenwand 12 und auf dem anderen Teil eine im Wesentlichen ebene, hier etwa senkrecht stehende Außenwand 13. Diese Verhältnisse sind aus der Fig. 2 ersichtlich. Dadurch bildet sich zwischen der gewölbten Außenwand 12 und der Innenwand der Trommel ein Bearbeitungskanal 3, in dem eine recht intensive mechanische Bearbeitung des Altpapiers erfolgt. Die Größe der dabei auftretenden Scherkräfte reicht einerseits aus, um eine intensive Auflösung der nassen Papierbahnen vorzunehmen, führt aber andererseits noch nicht zu einer unerwünschten Zerkleinerung der Störstoffe. Die Behandlung des Altpapiers wird kombiniert mit einer Fallbewegung, durch die das mit Hilfe der Trommel an den oberen Teil des Verdrängungskörpers 2 geförderte Papier entlang der geraden Außenwand 13 herabfällt. Die Kombination dieser beiden Bearbeitungsprinzipien ist vorteilhaft, andererseits kann aber zumindest abschnittsweise auch das Herabfallen lassen unterbleiben.

Die wesentliche Neuerung des Verfahrens ist in Fig. 1 sichtbar. Unmittelbar vor der zweiten Stirnseite 5' befindet sich nämlich eine hier an der Innenkontur der Trommel 1 befestigte Wendel 4. Diese transportiert den dort angelangten Stoff S' aus der Trommel wieder heraus. Er kann dann z.B. in einer nachfolgenden, hier nicht gezeigten Siebvorrichtung so sortiert werden, dass eine Schmutz- und eine Faserstofffraktion gebildet werden. Auch in Fig. 2 ist die Wendel 4 zu sehen. Sie kann mit einer Anzahl von Vorsprüngen 6 versehen sein, die mit Vorteil eine Hakenform haben. Dadurch gelingt es sehr einfach, in den Teilen der Trommel, die auf Grund der Drehbewegung nach oben laufen , die zum Verspinnen neigenden - nur angedeuteten - Verunreinigungen 16 anzuhängen. Wenn diese Verunreinigungen dann den oberen Teil des Verdrängungskörpers 2 passiert haben, können sie sich von den Haken wieder lösen und fallen dann zurück auf den Boden der Trommel bzw. aus dieser heraus. Anstelle der hier gezeigten Vorsprünge 6 können natürlich auch geeignete Vertiefungen in der Wendel 4 einen ähnlichen Effekt erzielen und hätten den Vorteil eines möglicherweise geringeren Verschleiß- oder Beschädigungsrisikos. Auch ein einfaches Zahnprofil wäre denkbar.

Die Höhe 7, mit der die Wendel 4 über der Innenwand der Trommel hervorsteht, ist ein wichtiger Parameter bei der Durchführung des Verfahrens. Sie muss groß genug sein, dass sich stromaufwärts ein Rückstau bilden kann, um dem Stoff eine ausreichende Verweilzeit zur Auflösung zu geben. Eventuell ist es sinnvoll, die Höhe 7 der Wendel in axialer Richtung zu variieren, z.B. sie im stromaufwärtigen Teil zu erhöhen, um einen größeren Rückstau bilden zu können. Eine andere Möglichkeit liegt darin, die Steigungswinkel der Wendel nicht konstant zu halten, um die Axialförderung den Erfordernissen in bestimmten Bereichen, axial betrachtet, anzupassen. Man kann auch die Wendel separat lagern und mit einer anderen - vorzugsweise geringeren - Drehzahl als die der Trommel antreiben, um dadurch die axiale Fördergeschwindigkeit zu beeinflussen. Das ist allerdings mit größerem apparativen Mehraufwand verbunden.

Der Austrag der Störstoffe kann zusätzlich durch einen oder mehrere axial nach außen gerichtete Druck-Wasserstrahlen 10 verbessert werden, wozu hier ein Düsenrohr 11 eingezeichnet ist. Da es feststeht, wäre es leicht an dem Verdrängungskörper 2 anzubringen. Die Verdünnung mit Wasser ist hier relativ unschädlich, da in der Regel die nachfolgende Sortierung ohnehin bei geringerer Konsistenz durchgeführt wird.

Die Förderleisten 9 erstrecken sich gemäß Fig. 1 im Wesentlichen über die ganze axiale Länge L der Trommel. Es sind aber auch kürzere oder unterbrochene Ausführungen denkbar.

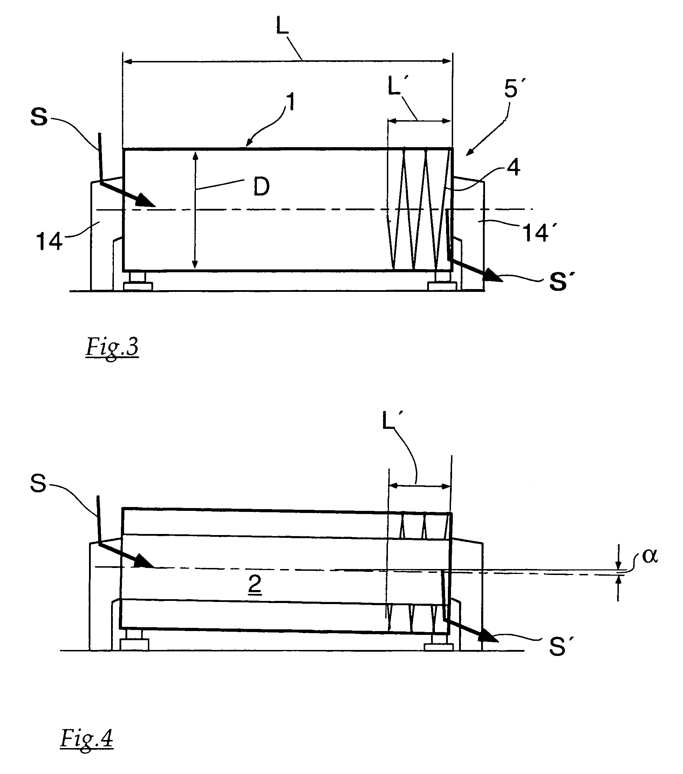

Für das Verfahren geeignete Trommeln sind in der Regel relativ groß. Das macht sie unempfindlich, betriebssicher und für große Produktionsmengen geeignet. Ihre Länge L (s. Fig. 3) ist vorteilhafterweise mindestens 6 m, vorzugsweise 10 bis 15 m, und ihr Innendurchmesser D mindestens 2 m, vorzugsweise 3 bis 4 m. Die axiale Länge L' der Wendel 4 kann mit Vorteil mindestens 10 % der Länge L der Trommel betragen, vorzugsweise mindestens 2 m. Zur besseren Übersichtlichkeit ist in Fig. 3 der Verdrängungskörper nicht gezeichnet.

Wie Fig. 4 zeigt, kann die Trommel 1 auch zum Auslauf hin in einem Neigungswinkel α um einige Grad abgesenkt sein, was die Axialförderung in der Trommel und den Austrag aus der Trommel begünstigt.

## Patentansprüche

1. Verfahren zum Auflösen von verunreinigtem Altpapier (S), bei dem dieses in eine liegende Trommel (1), an deren erste Stirnseite (5) eingefüllt und innerhalb der Trommel von der ersten zur zweiten Stirnseite (5') bewegt wird,
wobei die Innenwand der Trommel (1) in Umfangsrichtung mit mindestens 20 cm/sec bewegt wird und
wobei sich innerhalb der Trommel (1) mindestens ein von außen gehaltener Verdrängungskörper (2) mit einer zumindest abschnittsweise gewölbten Außenwand (12) befindet, der mit zumindest dem gewölbten Teil seiner Außenwand (12) und zumindest einem Teil der Innenwand der Trommel (1) einen Bearbeitungskanal (3) bildet, in dem eine mechanische Bearbeitung des Altpapiers erfolgt,
**dadurch gekennzeichnet,**
**dass** das in der Trommel (1) bearbeitete Altpapier an der zweiten Stirnseite (5') zusammen mit den enthaltenen Verunreinigungen mit Hilfe einer rotierenden Wendel (4) heraustransportiert wird.

2. Verfahren nach Anspruch 1,
**dadurch gekennzeichnet,**
**dass** mit der Wendel (4) der Rückstau für das in der Trommel (1) zu bearbeitende Altpapier gebildet wird.

3. Verfahren nach Anspruch 1 oder 2,
**dadurch gekennzeichnet,**
**dass** mit Hilfe von auf der Innenseite der Wendel (4) vorhandenen Vorsprüngen (6) oder Kanten zumindest ein Teil der länglichen Verunreinigungen angehoben, über den Verdrängungskörper (2) transportiert und danach wieder abgeworfen wird.

4. Verfahren nach Anspruch 1, 2 oder 3,
**dadurch gekennzeichnet,**
**dass** die Wendel (4) mit derselben Drehzahl bewegt wird wie die Trommel (1).

5. Verfahren nach Anspruch 1, 2 oder 3,
**dadurch gekennzeichnet,**
**dass** die Wendel (4) mit einer anderen Drehzahl bewegt wird als die Trommel (1).

6. Verfahren nach Anspruch 5,
**dadurch gekennzeichnet,**
**dass** die Wendel (4) mit einer geringeren Drehzahl bewegt wird als die Trommel (1).

7. Verfahren nach einem der voranstehenden Ansprüche,
**dadurch gekennzeichnet,**
**dass** eine Wendel (4) verwendet wird, deren Höhe (7) über der Innenwand der Trommel (1) mindestens 30 cm beträgt.

8. Verfahren nach einem der voranstehenden Ansprüche,
**dadurch gekennzeichnet,**
**dass** die Trommel (1) so betrieben wird, dass ihre Mitte zur Waagerechten einen Neigungswinkel (α) zwischen 0,5 und 10°, vorzugsweise 0,5 bis 2°, einnimmt.

9. Verfahren nach einem der voranstehenden Ansprüche,
**dadurch gekennzeichnet,**
**dass** der Stoff im Innern der Trommel (1) durch an der Innenwand angebrachte Förderleisten (9) angehoben wird.

10. Verfahren nach einem der voranstehenden Ansprüche,
**dadurch gekennzeichnet,**
**dass** der an der Wendel (4) anhängende Störstoff mit mindestens einem axial gerichteten Druck-Wasserstrahl (10) von der Wendel (4) abgelöst wird.

11. Verfahren nach Anspruch 10,
**dadurch gekennzeichnet,**
**dass** das dazu benötigte Düsenrohr (11) am oberen Teil des Verdrängers (2) fest gemacht ist.

12. Verfahren nach einem der voranstehenden Ansprüche,
**dadurch gekennzeichnet,**
**dass** eine Trommel (1) mit einem Innendurchmesser (D) von mindestens 2 m verwendet wird.

13. Verfahren nach einem der voranstehenden Ansprüche,
**dadurch gekennzeichnet,**
**dass** eine Trommel (1) mit einer Länge (L) von mindestens 6 m verwendet wird.

14. Verfahren nach einem der voranstehenden Ansprüche,
**dadurch gekennzeichnet,**
**dass** die Trommel (1) nicht perforiert ist.

15. Verfahren nach einem der Ansprüche 1 bis 13,
**dadurch gekennzeichnet,**
**dass** die Trommel (1) unmittelbar vor der zweiten Stirnseite (5') auf höchstens 30 % ihrer Axiallänge perforiert ist.

16. Verfahren nach einem der voranstehenden Ansprüche,
**dadurch gekennzeichnet,**
**dass** eine Wendel (4) verwendet wird, deren Axiallänge (L') mindestens 10 % der Länge (L) der Trommel beträgt.

17. Verfahren nach einem der voranstehenden Ansprüche,
**dadurch gekennzeichnet,**
**dass** eine Wendel (4) verwendet wird, deren Axiallänge (L') mindestens 2 m beträgt.

18. Verfahren nach einem der voranstehenden Ansprüche,
**dadurch gekennzeichnet,**
**dass** sich im Axialbereich der Wendel (4) zumindest teilweise auch ein Bearbeitungskanal (3) befindet.

## Claims

1. A method for pulping contaminated waste paper (S), in which said paper is poured into a horizontal drum (1) at the first end face (5) thereof and is moved within the drum from the first to the second end face (5'),
the inner wall of the drum (1) being moved in the peripheral direction at at least 20 cm/sec and
at least one displacement body (2), held from the outside, with an outer wall (12) which is curved at least in sections is located inside the drum (1), which body forms with at least the curved portion of its outer wall (12) and at least a portion of the inner wall of the drum (1) a processing channel (3), in which mechanical processing of the waste paper takes place,
**characterised in that**
the waste paper processed in the drum (1) is transported out at the second end face (5') together with the impurities contained therein using a rotating spiral (4).

2. A method according to Claim 1,
**characterised in that**
the back-up for the waste paper to be processed in the drum (1) is formed with the spiral (4).

3. A method according to Claim 1 or 2,
**characterised in that**
at least a portion of the longish impurities is lifted, transported over the displacement body (2) and then discarded again with the aid of projections (6) or edges present on the inside of the spiral (4).

4. A method according to Claim 1, 2 or 3,
**characterised in that**
the spiral (4) is moved at the same speed as the drum (1).

5. A method according to Claim 1, 2 or 3,
**characterised in that**
the spiral (4) is moved at a different speed from the drum (1).

6. A method according to Claim 5,
**characterised in that**
the spiral (4) is moved at a lower speed than the drum (1).

7. A method according to one of the preceding claims,
**characterised in that**
a spiral (4), the height (7) of which above the inner wall of the drum (1) is at least 30 cm, is used.

8. A method according to one of the preceding claims,
**characterised in that**
the drum (1) is operated such that its centre adopts an angle of inclination (α) of between 0.5 and 10°, preferably 0.5 to 2°, to the horizontal.

9. A method according to one of the preceding claims,
**characterised in that**
the stock inside the drum (1) is lifted by conveying bars (9) attached to the inner wall.

10. A method according to one of the preceding claims,
**characterised in that**
the anionic trash adhering to the spiral (4) is detached from the spiral (4) using at least one axially directed jet of pressurised water (10).

11. A method according to Claim 10,
**characterised in that**
the nozzle tube (11) required for this is secured to the upper portion of the displacement means (2).

12. A method according to one of the preceding claims,
**characterised in that**
a drum (1) with an internal diameter (D) of at least 2 m is used.

13. A method according to one of the preceding claims,
**characterised in that**
a drum (1) with a length (L) of at least 6 m is used.

14. A method according to one of the preceding claims,
**characterised in that**
the drum (1) is not perforated.

15. A method according to one of Claims 1 to 13,
**characterised in that**
the drum (1) is perforated immediately before the second end face (5') on at most 30% of its axial length.

16. A method according to one of the preceding claims,
**characterised in that**
a spiral (4), the axial length (L') of which is at least 10% of the length (L) of the drum, is used.

17. A method according to one of the preceding claims,
**characterised in that**
a spiral (4), the axial length (L') of which is at least 2 m, is used.

18. A method according to one of the preceding claims,
**characterised in that**
a processing channel (3) is also at least partially located in the axial region of the spiral (4).

## Revendications

1. Procédé de dissolution de vieux papiers (S) contenant des impuretés, dans lequel ceux-ci sont introduits dans un tambour horizontal (1) au niveau de sa première face frontale (5), et déplacés à l'intérieur du tambour de la première vers la deuxième face frontale (5'),
la paroi intérieure du tambour (1) étant déplacée dans la direction périphérique d'au moins 20 cm/s, et
au moins un corps de refoulement (2) retenu à partir de l'extérieur se trouvant à l'intérieur du tambour (1), lequel comporte une paroi extérieure (12) cintrée au moins par tronçons, et forme, au moins avec la partie cintrée de sa paroi extérieure (12) et au moins une partie de la paroi intérieure du tambour (1), un canal de traitement (3) dans lequel est effectué un traitement mécanique des vieux papiers,
**caractérisé en ce que**
les vieux papiers traités dans le tambour (1) sont évacués avec les impuretés contenues au niveau de la deuxième face frontale (5') à l'aide d'une hélice rotative (4) .

2. Procédé selon la revendication 1,
**caractérisé en ce que**
la retenue des vieux papiers à traiter dans le tambour (1) est engendrée par l'hélice (4).

3. Procédé selon la revendication 1 ou 2,
**caractérisé en ce que**,
à l'aide de saillies (6) ou d'arêtes prévues sur la face intérieure de l'hélice (4), une partie au moins des impuretés oblongues est soulevée, transportée au-dessus du corps de refoulement (2), et ensuite à nouveau déversée.

4. Procédé selon la revendication 1, 2 ou 3,
**caractérisé en ce que**
l'hélice (4) tourne à la même vitesse de rotation que le tambour (1).

5. Procédé selon la revendication 1, 2 ou 3,
**caractérisé en ce que**
l'hélice (4) tourne à une autre vitesse de rotation que le tambour (1).

6. Procédé selon la revendication 5,
**caractérisé en ce que**,
l'hélice (4) tourne à une vitesse de rotation plus faible que le tambour (1).

7. Procédé selon l'une des revendications précédentes,
**caractérisé en ce que**
il est utilisé une hélice (4) dont la hauteur (7) au-dessus de la paroi intérieure du tambour (1) est d'au moins 30 cm.

8. Procédé selon l'une des revendications précédentes,
**caractérisé en ce que**
le tambour (1) fonctionne de telle sorte que son centre occupe par rapport à l'horizontale un angle d'inclinaison (α) compris entre 0,5 et 10°, de préférence de 0,5 à 2°.

9. Procédé selon l'une des revendications précédentes,
**caractérisé en ce que**
la matière est soulevée à l'intérieur du tambour (1) par des barrettes de transport (9) fixées sur la paroi intérieure.

10. Procédé selon l'une des revendications précédentes,
**caractérisé en ce que**
des impuretés adhérant à l'hélice (4) sont décollées de l'hélice (4) par au moins un jet d'eau sous pression (10) orienté axialement.

11. Procédé selon la revendication 10,
**caractérisé en ce que**
le tube de buse (11) nécessaire à cet effet est fixé sur la partie supérieure du corps de refoulement (2).

12. Procédé selon l'une des revendications précédentes,
**caractérisé en ce que**
il est utilisé un tambour (1) d'un diamètre intérieur (D) d'au moins 2 m.

13. Procédé selon l'une des revendications précédentes,
**caractérisé en ce que**
il est utilisé un tambour (1) d'une longueur (L) d'au moins 6 m.

14. Procédé selon l'une des revendications précédentes,
**caractérisé en ce que**
le tambour (1) n'est pas perforé.

15. Procédé selon l'une des revendications 1 à 13,
**caractérisé en ce que**
le tambour (1) est perforé directement en amont de la deuxième face frontale (5') sur un maximum de 30 % de sa longueur axiale.

16. Procédé selon l'une des revendications précédentes,
**caractérisé en ce que**
il est utilisé une hélice (4) dont la longueur axiale (L') est égale à au moins 10 % de la longueur (L) du tambour.

17. Procédé selon l'une des revendications précédentes,
**caractérisé en ce que**
il est utilisé une hélice (4), dont la longueur axiale (L') est d'au moins 2 m.

18. Procédé selon l'une des revendications précédentes,
**caractérisé en ce que**
un canal de traitement (3) se trouve également, au moins partiellement, dans la zone axiale de l'hélice (4).
